# EUROPEAN PATENT APPLICATION

(11) **EP 4 703 697 A1**
(43) Date of publication of application: **04.03.2026**
(21) Application number: 24796638.5
(22) Date of filing: 19.03.2024
(51) Int. Cl.: G01L 3/10

(54) **MAGNETOSTRICTIVE TORQUE SENSOR SHAFT**

(30) Priority: 25.04.2023 JP 2023071564
(71) Applicant: Usui Co., Ltd., Sunto-gun, Shizuoka 411-8610 (JP)
(72) Inventor: KOMAKI, Masahiro, Sunto-gun, Shizuoka 411-8610 (JP); KAWASAKA, Kenji, Sunto-gun, Shizuoka 411-8610 (JP); ITO, Hidetaka, Sunto-gun, Shizuoka 411-8610 (JP); FUKUDOME, Yoshihisa, Sunto-gun, Shizuoka 411-8610 (JP); KONDO, Hiroaki, Sunto-gun, Shizuoka 411-8610 (JP)
(74) Representative: Louis Pöhlau Lohrentz
(86) International application number: PCT/JP2024/010641
(87) International publication number: WO 2024/224880

(57) **Abstract**

In order to provide a magnetostrictive torque sensor shaft capable of improving torque detection accuracy by determining a setting range of a pitch of grooves formed in a magnetostrictive portion, the magnetostrictive torque sensor shaft (1) includes a first magnetostrictive portion (20a) for torque detection provided on a shaft body (10). The first magnetostrictive portion (20a) includes a magnetostrictive film (21) on a surface of the shaft body (10) and a plurality of grooves (22) in the magnetostrictive film (21). The grooves (22) extend in a direction inclined relative to an axial direction (O) of the shaft body (10) and are arranged at a predetermined pitch (ΔP) in a circumferential direction (R) of the shaft body (10). The setting range of the pitch (ΔP) has an upper limit value set to a value less than a pitch at a limit of making the grooves by shot blasting, and a lower limit value set to a value not less than a pitch at which a voltage to be detected when a predetermined torque is applied to the shaft body (10) reaches a peak.

## Description

### [Technical Field]

The present invention relates to a magnetostrictive torque sensor shaft.

### [Background Art]

Conventionally, a magnetostrictive torque-sensor shaft has been known in which a plurality of grooves (chevron pattern) are formed in a magnetostrictive portion provided on the surface of a shaft body. The shaft is used in a torque sensor that detects the magnitude of torque applied to a cylindrical shaft body by converting it into a voltage (see, e.g., Patent Literature 1 and Patent Literature 2).

The plurality of grooves formed in the magnetostrictive portion extend at an inclination with respect to the axial direction of the shaft body and are arranged at a predetermined pitch in the circumferential direction of the shaft body. It is known that torque-detection accuracy can be improved by making the groove pitch finer (see, e.g., Patent Literature 3).

### [Prior Art Documents]

### [Patent Literature]

[Patent Literature 1] Japanese Patent Application Publication No. 2022-140742
[Patent Literature 2] Japanese Patent Application Publication No. 2005-008971
[Patent Literature 3] Japanese Patent No. 5044372

### [Summary of Invention]

### [Problem to be solved]

Patent Literature 3 discloses that the number of grooves on the shaft body can be increased by making the groove pitch finer, thereby improving torque-detection accuracy. However, it does not disclose any setting range for the groove pitch. In other words, simply making the groove pitch finer does not necessarily improve torque-detection accuracy.

In view of the foregoing problem, the present invention provides a magnetostrictive torque-sensor shaft capable of improving torque-detection accuracy by defining a setting range for the pitch of a plurality of grooves formed in the magnetostrictive portion.

### [Solution to Problem]

In order to achieve the above-mentioned object, a magnetostrictive torque sensor shaft for a torque sensor includes a magnetostrictive portion for torque detection provided on a cylindrical shaft body. The torque sensor is configured to convert the magnitude of torque applied to the shaft body into voltage and detect it. The magnetostrictive portion includes a magnetostrictive film on a surface of the shaft body, and a plurality of grooves in the magnetostrictive film. The plurality of grooves extend in a direction inclined relative to an axial direction of the shaft body and are arranged at a predetermined pitch in a circumferential direction of the shaft body. A setting range of the predetermined pitch includes an upper limit value and a lower limit value. The upper limit value is set to a value less than a pitch at a limit of making the grooves by shot blasting, and the lower limit value is set to a value not less than a pitch at which the voltage to be detected when a predetermined torque is applied to the shaft body reaches a peak.

### [Effects of Invention]

Accordingly, the magnetostrictive torque-sensor shaft of the present invention can improve torque-detection accuracy by appropriately defining the setting range of the pitch of the plurality of grooves in the magnetostrictive portion.

### [Brief Description of Drawings]

[FIG. 1] FIG. 1 is a longitudinal cross-sectional view illustrating the structure of a torque sensor to which a magnetostrictive torque-sensor shaft according to a first embodiment is applied.
[FIG. 2] FIG. 2 is an explanatory view illustrating the magnetostrictive torque-sensor shaft according to the first embodiment.
[FIG. 3] FIG. 3 is an enlarged view of a cross section taken along line A-A in FIG. 2.
[FIG. 4] FIG. 4 is a graph showing the relationship between groove pitch and output voltage when the magnetostrictive film is made of an iron-cobalt alloy and the shaft body has a length of 85 mm.
[FIG. 5] FIG. 5 is a graph showing the relationship between groove pitch and output voltage when the magnetostrictive film is made of a nickel-iron alloy and the shaft body has a length of 85 mm.
[FIG. 6] FIG. 6 is a graph showing the relationship between groove pitch and output voltage when the magnetostrictive film is made of a nickel-iron alloy and the shaft body has a length of 47.5 mm.
[FIG. 7] FIG. 7 is an explanatory view illustrating a magnetostrictive torque-sensor shaft according to a first modified embodiment.

### [Detailed Description of Embodiments]

An embodiment of the magnetostrictive torque-sensor shaft according to the present invention will now be described with reference to the drawings, based on the first embodiment.

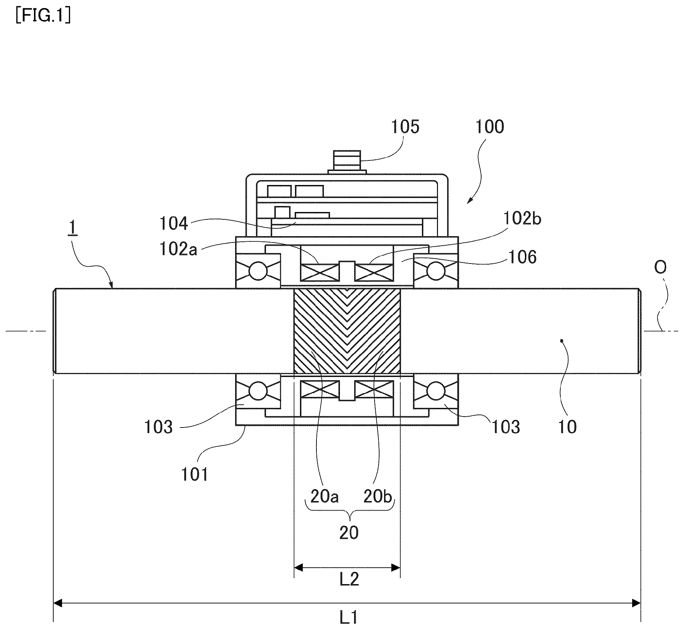

A magnetostrictive torque-sensor shaft 1 (hereinafter, "sensor shaft") according to the first embodiment is used in a torque sensor 100 shown in FIG. 1. The torque sensor 100 includes a housing 101, a first coil 102a, and a second coil 102b.

The housing 101 is configured to receive the sensor shaft 1 and to support both end portions of the sensor shaft 1 via bearings 103. The housing 101 is further provided with a circuit board 104 on which various electrical components are mounted and with a connector 105 for signal lines.

The first coil 102a and the second coil 102b are wound around a bobbin 106 built into the housing 101 and each have a cylindrical shape surrounding the sensor shaft 1. The first coil 102a is disposed adjacent to the outer circumference of a first magnetostrictive portion 20a provided on the sensor shaft 1. The second coil 102b is disposed adjacent to the outer circumference of a second magnetostrictive portion 20b provided on the sensor shaft 1. The first and second coils 102a and 102b are electrically connected to the circuit board 104 via conductors (not shown), respectively.

Here, when torque is applied to the sensor shaft 1, tensile stress and compressive stress are generated in the first magnetostrictive portion 20a and the second magnetostrictive portion 20b, respectively. As a result of opposite magnetostrictive effects, the magnetic permeabilities of the first and second magnetostrictive portions 20a and 20b change (increase and decrease), respectively. Furthermore, changes in magnetic permeability in the first and second magnetostrictive portions 20a and 20b induce electromotive forces in the first and second coils 102a and 102b. The torque sensor 100 then performs DC conversion, differential amplification, and the like on the induced electromotive forces generated in the first coil 102a and the second coil 102b and outputs a voltage proportional to the magnitude of torque applied to the sensor shaft 1. In other words, the torque sensor 100 detects the magnitude of torque applied to the sensor shaft 1 by converting it into a voltage.

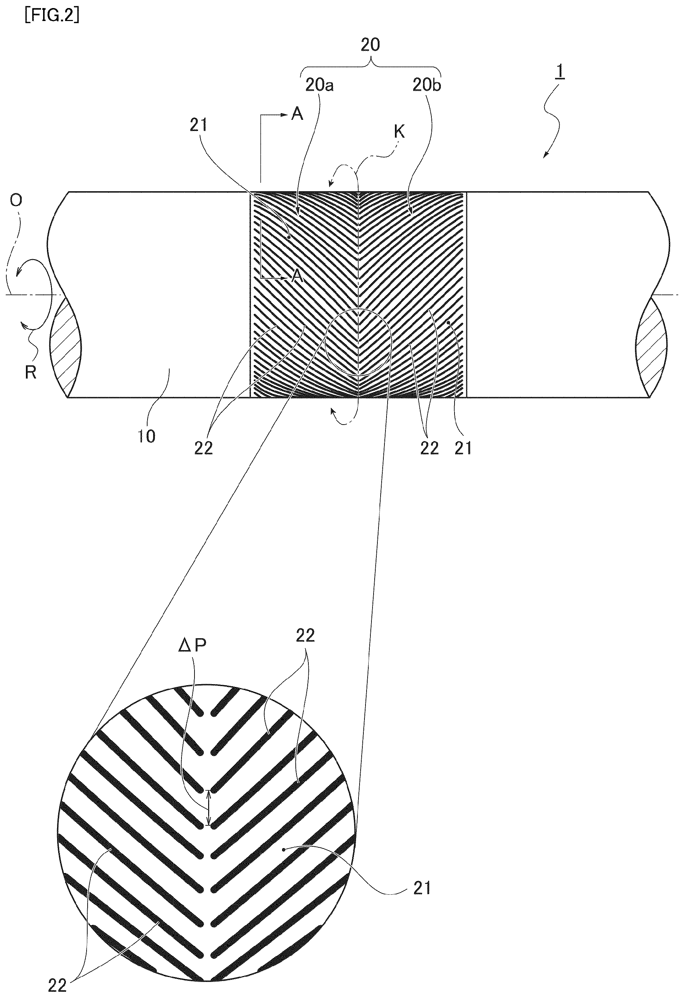

As shown in FIG. 2, the sensor shaft 1 according to the first embodiment includes a shaft body 10 and a magnetostrictive portion 20 for torque detection.

The shaft body 10 is a cylindrical body having a predetermined length L1. The shaft body 10 is made of, for example, an iron-based material. Examples of materials usable for the shaft body 10 include, for example, chromium steel, chromium molybdenum steel, nickel chromium molybdenum steel, martensitic stainless steel, and precipitation hardening stainless steel. The mechanical strength of the shaft body 10, including toughness, is increased by subjecting the entirety of the shaft body 10 to carburizing, quenching, and tempering.

The magnetostrictive portion 20 is provided in an intermediate portion in the axial direction O (longitudinal direction) of the shaft body 10. The magnetostrictive portion 20 includes a magnetostrictive film 21 provided on the surface of the shaft body 10 and a plurality of grooves 22 formed in the magnetostrictive film 21. The magnetostrictive portion 20 is provided over the entire circumference of the shaft body 10. In one embodiment, an axial length L2 of the magnetostrictive portion 20 is 25 mm ± 2 mm. The magnetostrictive portion 20 includes a first magnetostrictive portion 20a and a second magnetostrictive portion 20b aligned in the axial direction O with a boundary line K extending in the circumferential direction R of the shaft body 10 interposed therebetween.

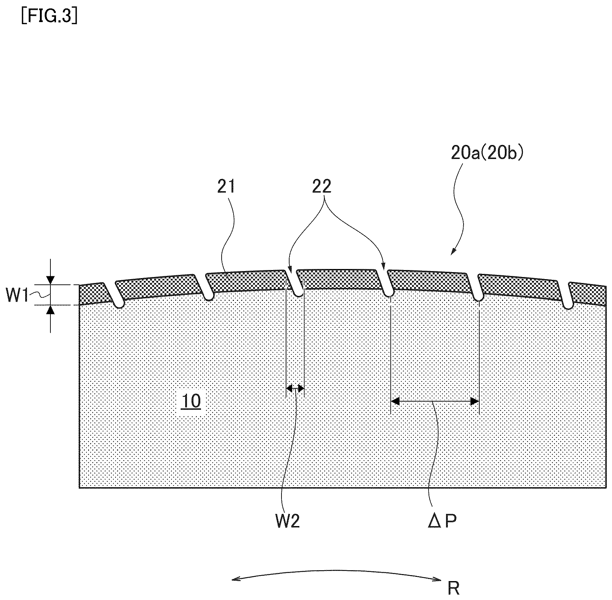

The magnetostrictive film 21 is made of a magnetic material such as metallic glass (amorphous alloy). The magnetostrictive film 21 may be provided by attaching an amorphous thin strip to the surface of the cylindrical shaft body 10 or by forming a magnetic layer on the surface of the shaft body 10 by plasma spraying, sputtering, plating, powder flame spraying, and the like. Powder flame spraying is a thermal spraying method in which a flame containing a metal powder is sprayed to melt the metal powder, while the flame is cooled by a cooling gas from the outside before reaching the surface of the shaft body 10, thereby forming the magnetostrictive film 21 on the surface of the shaft body 10. In one embodiment, the magnetostrictive film 21 (see FIG. 3) has a thickness W1 of about 120 µm. The magnetostrictive film 21 of the first magnetostrictive portion 20a and that of the second magnetostrictive portion 20b may be integrally formed, or they may be separately formed.

A plurality of grooves 22 are arranged along the circumferential direction R of the shaft body 10 at a predetermined pitch ΔP and extend in a direction inclined relative to the axial direction O. In other words, the plurality of grooves 22 extend spirally along the circumferential surface of the shaft body 10. In one embodiment, the plurality of grooves 22 extend in a direction inclined by 45 degrees relative to the axial direction O.

Furthermore, the extension direction of the grooves 22 in the first magnetostrictive portion 20a and the extension direction of the grooves 22 in the second magnetostrictive portion 20b are defined to be line-symmetric (in opposing directions), with the boundary line K on a plane perpendicular to the axial direction O serving as a line of symmetry. As a result, when a predetermined torque is applied to the shaft body 10, the stress generated in the first magnetostrictive portion 20a and the stress generated in the second magnetostrictive portion 20b oppose each other. In other words, when a predetermined torque is applied to the shaft body 10 and tensile stress is generated in the first magnetostrictive portion 20a, compressive stress is generated in the second magnetostrictive portion 20b, and when a predetermined torque is applied to the shaft body 10 and compressive stress is generated in the first magnetostrictive portion 20a, tensile stress is generated in the second magnetostrictive portion 20b.

In the first embodiment, the grooves 22 are formed by linearly removing a part of the magnetostrictive film 21 on the surface of the shaft body 10 by laser processing using a laser processing machine. In other words, the laser processing machine repeatedly irradiates a laser beam at high speed onto the magnetostrictive film 21, using, for example, a fiber laser set at a predetermined laser output (for example, 50 W), to linearly remove the magnetostrictive film 21 and form the grooves 22. In the first embodiment, each of the grooves 22 has a groove width W2 (length in the circumferential direction R) of 70 µm. In the first embodiment, the irradiation speed of the laser beam is 1000 to 5000 mm/s.

It is preferable that each of the grooves 22 has a depth at which the magnetostrictive film 21 is completely removed and machining marks made by the laser processing machine remain slightly on the shaft body 10. If the magnetostrictive film 21 is not completely removed, the magnetic permeability of the magnetostrictive portion 20 generated when torque is applied to the sensor shaft 1 may be reduced, and the torque detection accuracy of the torque sensor 100 may be lowered. If the machining marks on the shaft body 10 are too large (too deep), the strength of the shaft body 10 may be lowered.

Furthermore, in the first embodiment, the pitch ΔP of the grooves 22 is set at a uniform interval in the sensor shaft 1. The setting range of the pitch ΔP is determined by the following conditions. The upper limit value of the pitch ΔP is set to a value less than a pitch Px at the limit of making the grooves by shot blasting. The lower limit value of the pitch ΔP is set to a value not less than a pitch Py at which the voltage to be detected when a predetermined torque is applied to the shaft body 10 reaches a peak.

Here, the pitch Px at the limit of making the grooves by shot blasting is the lower limit pitch when the grooves 22 are formed by shot blasting. To form the grooves 22 by shot blasting, first, a masking film is attached to the magnetostrictive film 21 on the surface of the shaft body 10. The film has already been preformed with punched holes in the shape of the grooves 22. After the film is attached, the magnetostrictive film 21 covered with the masking film is sprayed or impacted with a projection material, thereby scraping off the magnetostrictive film 21 in the area not covered with the film (region corresponding to the punched holes) to form the grooves 22.

At this time, the pitch ΔP of the grooves 22 must be set at a predetermined interval in order to prevent peeling of the masking film. In other words, when the grooves 22 are formed by shot blasting, it is necessary to secure the pitch ΔP required to prevent peeling of the masking film attached to the magnetostrictive film 21. This pitch ΔP required to prevent peeling of the masking film is the pitch Px at the limit of making grooves by shot blasting, and this pitch is set to 1.8 mm in the first embodiment.

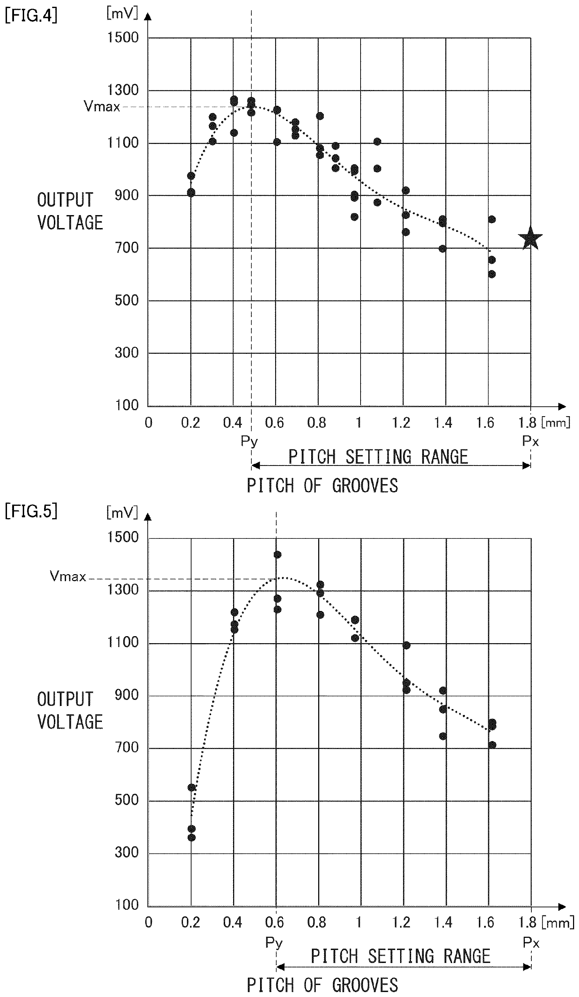

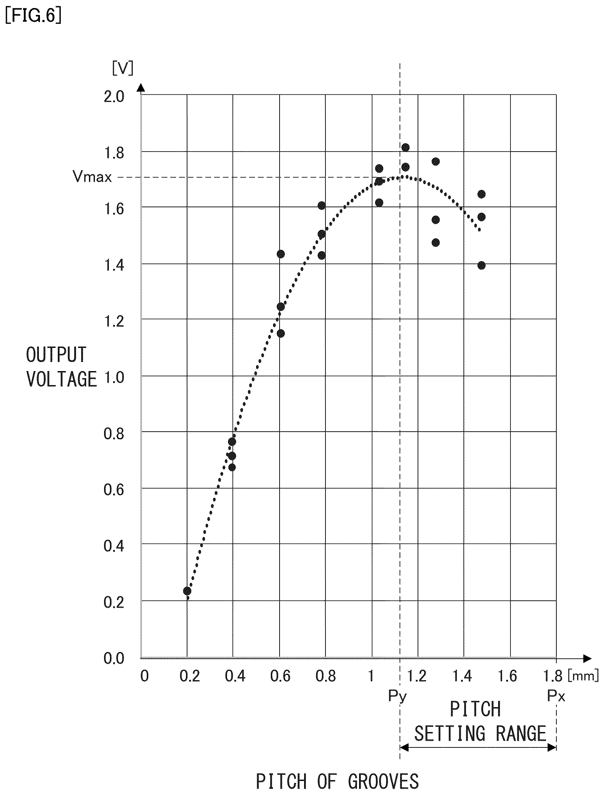

The voltage (hereinafter referred to as "output voltage") detected when a predetermined torque (which may be freely set) is applied to the shaft body 10 mounted in the torque sensor 100 changes depending on the pitch ΔP of the grooves 22. As shown in FIGS. 4 to 6, the output voltage for each pitch ΔP of the grooves 22 varies depending on the material of the magnetostrictive film 21 and the length L1 of the shaft body 10. FIG. 4 shows the relationship between the pitch ΔP of the grooves 22 and the output voltage in a case where the magnetostrictive film 21 is made of an iron-cobalt alloy (Fe-Co) and the shaft body 10 has a length L1 of 85 mm. FIG. 5 shows the relationship between the pitch ΔP of the grooves 22 and the output voltage in a case where the magnetostrictive film 21 is made of a nickel-iron alloy (Ni-Fe) and the shaft body 10 has a length L1 of 85 mm. FIG. 6 shows the relationship between the pitch ΔP of the grooves 22 and the output voltage in a case where the magnetostrictive film 21 is made of a nickel-iron alloy (Ni-Fe) and the shaft body 10 has a length L1 of 47.5 mm.

As shown in FIGS. 4 to 6, even when torque of the same magnitude (a predetermined torque) is applied to the shaft body 10, as the pitch ΔP of the grooves 22 becomes smaller (narrower), the output voltage increases gradually. When the pitch ΔP of the grooves 22 reaches a predetermined pitch, the output voltage reaches the peak (Vmax). Here, as shown in FIGS. 4 to 6, the pitch ΔP of the grooves 22 at which the output voltage reaches the peak (Vmax) varies depending on the material of the magnetostrictive film 21 and the length L1 of the shaft body 10. As the pitch ΔP becomes smaller than the predetermined pitch, the output voltage decreases gradually.

For the relationship between the pitch ΔP of the grooves 22 and the output voltage shown in FIGS. 4 to 6, a plurality of sensor shafts 1 are prepared. The sensor shafts 1 have the same material of the magnetostrictive film 21 and the same length L1 of the shaft body 10 but have different pitches ΔP of the grooves 22. Then, the relationship can be experimentally determined by applying the same torque to each of the sensor shafts 1 and detecting the voltage.

In FIG. 4, a star mark shows the output voltage detected when the pitch ΔP of the grooves 22 is set to 1.8 mm, which is the pitch Px at the limit of making the grooves by shot blasting. The pitch Px at the limit of making the grooves by shot blasting varies depending on various shot blasting conditions, such as the adhesion strength of the masking film, the material of the masking film, and the size of the projection material. Therefore, it is preferable to set the pitch Px in the range of 1.7 mm to 1.9 mm, taking into account an error range based on the shot blasting conditions.

The "pitch Py at which the voltage to be detected when a predetermined torque is applied to the shaft body 10 reaches a peak", which defined the lower limit value of the pitch ΔP of the grooves 22, is the pitch ΔP of the grooves 22 when the output voltage reaches a peak (maximum value Vmax) detected by the torque sensor 100 after a predetermined torque is applied to the shaft body 10. In other words, the predetermined pitch at which the output voltage reaches "a peak (Vmax)" in the relationship between the pitch ΔP of the grooves 22 and the output voltage shown in FIGS. 4 to 6 is the "pitch Py at which the voltage to be detected when a predetermined torque is applied to the shaft body 10 reaches a peak."

Furthermore, the pitch ΔP of the grooves 22 at which the output voltage reaches the peak (Vmax) varies depending on the material of the magnetostrictive film 21 and the length L1 of the shaft body 10. Therefore, the pitch Py has different values depending on the material of the magnetostrictive film 21 and the length L1 of the shaft body 10. In other words, the pitch Py is set based on the material of the magnetostrictive film 21 and the length L1 of the shaft body 10.

Specifically, as shown in FIG. 4, when the material of the magnetostrictive film 21 is an iron-cobalt alloy and the length L1 of the shaft body 10 is 85 mm, the output voltage reaches a peak (Vmax) when the pitch ΔP of the grooves 22 is about 0.5 mm. Therefore, the pitch Py is about 0.5 mm. The pitch Py is determined based on the experimentally obtained relationship between the pitch ΔP of the grooves 22 and the output voltage. Therefore, when the material of the magnetostrictive film 21 is an iron-cobalt alloy and the length L1 of the shaft body 10 is 85 mm, it is preferable to set the pitch Py in a range of 0.4 mm to 0.6 mm including an error range. The length L1 of the shaft body 10 in this case is not limited to 85 mm but may be in a range of 80 mm to 90 mm including an error range.

That is, based on the experimental result shown in FIG. 4, when the material of the magnetostrictive film 21 is an iron-cobalt alloy and the length L1 of the shaft body 10 is 80 mm to 90 mm, it is preferable to set the pitch Py in a range of 0.4 mm to 0.6 mm including an error range.

As shown in FIG. 5, when the material of the magnetostrictive film 21 is a nickel-iron alloy and the length L1 of the shaft body 10 is 85 mm, the output voltage reaches a peak (Vmax) when the pitch ΔP of the grooves 22 is about 0.6 mm. Therefore, the pitch Py is about 0.6 mm. When the material of the magnetostrictive film 21 is a nickel-iron alloy and the length L1 of the shaft body 10 is 85 mm, it is preferable to set the pitch Py in a range of 0.5 mm to 0.7 mm including an error range. The length L1 of the shaft body 10 in this case is not limited to 85 mm but may be in a range of 80 mm to 90 mm including an error range.

That is, based on the experimental result shown in FIG. 5, when the material of the magnetostrictive film 21 is a nickel-iron alloy and the length L1 of the shaft body 10 is within a range of 80 mm to 90 mm, it is preferable to set the pitch Py in a range of 0.5 mm to 0.7 mm including an error range.

Furthermore, as shown in FIG. 6, when the material of the magnetostrictive film 21 is a nickel-iron alloy and the length L1 of the shaft body 10 is 47.5 mm, the output voltage reaches a peak (Vmax) when the pitch ΔP of the grooves 22 is about 1.1 mm. Therefore, the pitch Py is about 1.1 mm. When the material of the magnetostrictive film 21 is a nickel-iron alloy and the length L1 of the shaft body 10 is 47.5 mm, it is preferable to set the pitch Py in a range of 1.0 mm to 1.2 mm including an error range. The length L1 of the shaft body 10 in this case is not limited to 47.5 mm but may be in a range of 42.5 mm to 52.5 mm including an error range.

That is, based on the experimental result shown in FIG. 6, when the material of the magnetostrictive film 21 is a nickel-iron alloy and the length L1 of the shaft body 10 is within a range of 42.5 mm to 52.5 mm, it is preferable to set the pitch Py in a range of 1.0 mm to 1.2 mm including an error range.

Based on the above, in the sensor shaft 1 according to the first embodiment, the setting range of the pitch ΔP of the grooves 22 of the first and second magnetostrictive portions 20a and 20b has an upper limit value of less than 1.8 mm. It is preferable that the upper limit value of the setting range of the pitch ΔP is in a range of 1.7 mm to 1.9 mm when an error range based on shot blasting conditions is included.

In the sensor shaft 1 according to the first embodiment, the lower limit value of the setting range of the pitch ΔP of the grooves 22 is set to not less than 0.5 mm when the material of the magnetostrictive film 21 is an iron-cobalt alloy and the length L1 of the shaft body 10 is 85 mm. Also, the lower limit value of the setting range of the pitch ΔP of the grooves 22 is set to not less than 0.6 mm when the material of the magnetostrictive film 21 is a nickel-iron alloy and the length L1 of the shaft body 10 is 85 mm. Furthermore, the lower limit value of the setting range of the pitch ΔP of the grooves 22 is set to not less than 1.0 mm when the material of the magnetostrictive film 21 is a nickel-iron alloy and the length L1 of the shaft body 10 is 47.5 mm.

When an experimental error range is included, the pitch Py, at which the voltage to be detected when a predetermined torque is applied to the shaft body 10 reaches a peak, is set in a range of 0.4 mm to 0.6 mm when the material of the magnetostrictive film 21 is an iron-cobalt alloy and the length L1 of the shaft body 10 is in a range of 80 mm to 90 mm. Also, the pitch Py is set in a range of 0.5 mm to 0.7 mm when the material of the magnetostrictive film 21 is a nickel-iron alloy and the length L1 of the shaft body 10 is in a range of 80 mm to 90 mm. Furthermore, the pitch Py is set in a range of 1.0 mm to 1.2 mm when the material of the magnetostrictive film 21 is a nickel-iron alloy and the length L1 of the shaft body 10 is in a range of 42.5 mm to 52.5 mm.

The operation of the sensor shaft 1 according to the first embodiment will be described as follows.

The sensor shaft 1 according to the first embodiment includes the shaft body 10 and first and second magnetostrictive portions 20a and 20b provided on the shaft body 10. The sensor shaft 1 is used in a torque sensor 100 that is configured to convert the torque applied to the shaft body 10 into a voltage and output it. The first and second magnetostrictive portions 20a and 20b include a magnetostrictive film 21 and a plurality of grooves 22 formed in the magnetostrictive film 21. The grooves 22 extend in a direction inclined relative to the axial direction O of the shaft body 10 and are arranged at a predetermined pitch ΔP in the circumferential direction R of the shaft body 10. The setting range of the pitch ΔP of the grooves 22 has an upper limit value and a lower limit value. The upper limit value is set to a value less than the pitch Px at the limit of making the grooves by shot blasting and the lower limit value is set to a value not less than the pitch Py at which the voltage to be detected when a predetermined torque is applied to the shaft body 10 reaches a peak.

As a result, the pitch ΔP of the grooves 22 is set to less than the pitch Px at the limit of making the grooves by shot blasting and at not less than the pitch Py at which the voltage to be detected when a predetermined torque is applied to the shaft body 10 reaches a peak.

Therefore, in the sensor shaft 1 according to the first embodiment, the pitch ΔP of the grooves 22 is smaller than the pitch obtained when the grooves 22 are formed by shot blasting. Accordingly, the number of the grooves 22 formed in the first magnetostrictive portion 20a or the second magnetostrictive portion 20b can be made greater than that obtained when the grooves 22 are formed by shot blasting. As a result, the output voltage when a predetermined torque is applied to the shaft body 10 can be increased.

The voltage (output voltage) to be detected when a predetermined torque is applied to the shaft body 10 increases as the pitch ΔP of the grooves 22 decreases (narrows). A higher output voltage is preferable, because it enables detection of even smaller torque. However, when the pitch ΔP of the grooves 22 is smaller than the pitch Py at which the voltage to be detected when a predetermined torque is applied to the shaft body 10 reaches a peak, the output voltage decreases as the pitch ΔP decreases. This is considered to result from the increased thermal effect of the laser during machining the grooves 22, which lowers the amorphization rate of the magnetostrictive film 21 and thereby its magnetostrictive characteristics.

In contrast, in the sensor shaft 1 according to the first embodiment, the lower limit value of the pitch ΔP of the grooves 22 is set to not less than the pitch Py at which the voltage to be detected when a predetermined torque is applied to the shaft body 10 reaches a peak. Therefore, the pitch ΔP of the grooves 22 is not smaller than the pitch Py at which the voltage to be detected when a predetermined torque is applied to the shaft body 10 reaches a peak. As a result, the sensor shaft 1 according to the first embodiment can suppress the deterioration of the magnetostrictive characteristics of the magnetostrictive film 21 and a decrease in the output voltage when a predetermined torque is applied to the shaft body 10.

Thus, the sensor shaft 1 according to the first embodiment can improve torque detection accuracy by defining the setting range of the pitch ΔP of a plurality of grooves 22 formed in the first and the second magnetostrictive portions 20a and 20b.

When the grooves 22 are formed by partially removing the magnetostrictive film 21, for example, by linearly arranging a plurality of partially overlapping holes in the magnetostrictive film 21, residue may remain within the grooves 22 after removal of the magnetostrictive film 21. Therefore, in this case, there is a risk that the grooves 22 may be divided in the longitudinal direction, which may cause a decrease in the output voltage when a predetermined torque is applied to the shaft body 10. In contrast, in the sensor shaft 1 according to the first embodiment, the grooves 22 are formed by linearly removing the magnetostrictive film 21 by repeatedly irradiating the magnetostrictive film 21 with a laser beam at high speed. Therefore, in the sensor shaft 1 according to the first embodiment, no residue remains within the grooves 22 after removal of the magnetostrictive film 21, thereby making it possible to suppress a decrease in the output voltage when a predetermined torque is applied to the shaft body 10 and to improve torque detection accuracy.

The output voltage when the same torque is applied to the shaft body 10 varies depending on the pitch ΔP of the grooves 22. However, as shown in FIGS. 4 to 6, the relationship between the pitch ΔP of the grooves 22 and the output voltage varies depending on the material of the magnetostrictive film 21 and the length L1 of the shaft body 10.

In this regard, in the sensor shaft 1 according to the first embodiment, the pitch Py, at which the voltage to be detected when a predetermined torque is applied to the shaft body 10 reaches a peak, defines the lower limit value of the pitch ΔP of the grooves 22, and is set on the basis of the material of the magnetostrictive film 21 and the length L1 of the shaft body 10. This makes it possible in the sensor shaft 1 according to the first embodiment to appropriately set the lower limit value of the setting range of the pitch ΔP according to the material of the magnetostrictive film 21 and the length L1 of the shaft body 10, even if the relationship between the pitch ΔP of the grooves 22 and the output voltage varies. Therefore, the sensor shaft 1 according to the first embodiment can suppress a decrease in the magnetostrictive characteristics of the magnetostrictive film 21 and can improve torque detection accuracy irrespective of the material of the magnetostrictive film 21 and the length L1 of the shaft body 10.

In the sensor shaft 1 according to the first embodiment, when the material of the magnetostrictive film 21 is an iron-cobalt alloy and the length L1 of the shaft body 10 is within a range of 80 mm to 90 mm, the pitch Py, at which the voltage to be detected when a predetermined torque is applied to the shaft body 10 reaches a peak, is set in a range of 0.4 mm to 0.6 mm. When the material of the magnetostrictive film 21 is a nickel-iron alloy and the length L1 of the shaft body 10 is within a range of 80 mm to 90 mm, the pitch Py, at which the voltage to be detected when a predetermined torque is applied to the shaft body 10 reaches a peak, is set in a range of 0.5 mm to 0.7 mm. When the material of the magnetostrictive film 21 is a nickel-iron alloy and the length L1 of the shaft body 10 is within a range of 42.5 mm to 52.5 mm, the pitch Py, at which the voltage to be detected when a predetermined torque is applied to the shaft body 10 reaches a peak, is set in a range of 1.0 mm to 1.2 mm.

As a result, in the sensor shaft 1 according to the first embodiment, it is possible to set the lower limit value of the setting range of the pitch ΔP at respective optimal values, including an experimental error range, when the material of the magnetostrictive film 21 is an iron-cobalt alloy or a nickel-iron alloy and the length L1 of the shaft body 10 is within either the range of 80 mm to 90 mm or the range of 42.5 mm to 52.5 mm. In other words, the sensor shaft 1 according to the first embodiment can improve the torque detection accuracy by defining the lower limit value of the setting range of the pitch ΔP in an appropriate range when the material of the magnetostrictive film 21 is an iron-cobalt alloy or a nickel-iron alloy and the length L1 of the shaft body 10 is within either the range of 80 mm to 90 mm or the range of 42.5 mm to 52.5 mm.

As above, the magnetostrictive sensor shaft according to the present invention has been described based on the first embodiment. However, the specific configuration of the sensor shaft is not limited to the first embodiment, and design changes, additions, and the like are permitted as long as they do not deviate from the gist of the invention according to each claim.

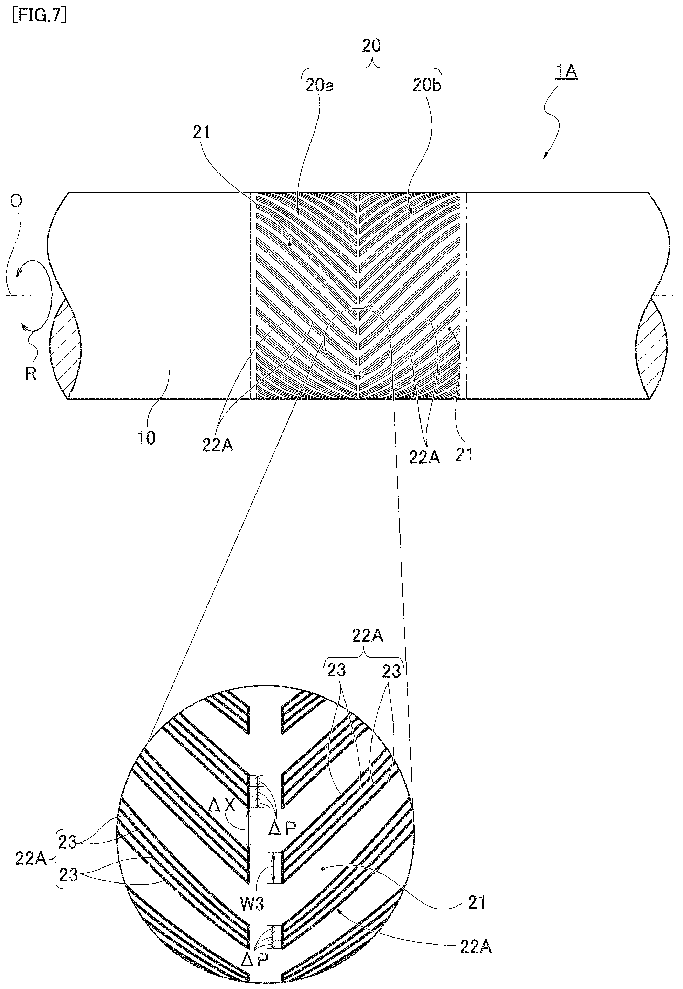

The sensor shaft 1 according to the first embodiment has been described with an example in which the grooves 22 having a groove width W2 (length in the circumferential direction R) of 70 µm are formed at a predetermined pitch ΔP. However, the shape of the grooves 22 is not limited thereto. For example, as in a sensor shaft 1A according to a first modified embodiment shown in FIG. 7, a plurality of grooves 23 may be formed at a predetermined pitch ΔP, with their ends connected to each other to form groove groups 22A. Here, the width W3 (length in the circumferential direction R) of the groove group 22A is set, for example, at a predetermined value of about 2 mm. The interval ΔX along the circumferential direction R between adjacent groove groups 22A is set, for example, at a predetermined value of about 3 mm. In other words, in the sensor shaft 1A according to the first modified embodiment, a plurality of grooves 23 formed at a predetermined pitch ΔP are connected at their ends to form the groove groups 22A, and the groove groups 22A are arranged with a predetermined interval ΔX therebetween.

Even in this case, by setting the pitch ΔP of the plurality of grooves 23 at a value not less than the pitch Py at which the voltage to be detected when a predetermined torque is applied to the shaft body 10 reaches a peak, it is possible to suppress a reduction in the amorphization rate of the magnetostrictive film 21. As a result, the sensor shaft 1A according to the first modified embodiment can suppress a reduction in the output voltage when a predetermined torque is applied to the shaft body 10.

The sensor shaft 1 according to the first embodiment has been described with an example in which the angle between the extension direction of the grooves 22 and the axial direction O is set to 45 degrees. However, it is sufficient that the grooves 22 are arranged at a predetermined pitch ΔP in the circumferential direction R of the shaft body 10 and extend in a direction inclined relative to the axial direction O. Therefore, the angle between the extension direction of the grooves 22 and the axial direction O may be set to any angle.

The sensor shaft 1 according to the first embodiment has been described with an example in which the grooves 22 are formed by laser processing. However, it is sufficient that the grooves 22 are formed at a pitch ΔP within the setting range defined between the upper limit value set to the pitch Px at the limit of making the grooves by shot blasting and the lower limit value set to the pitch Py at which the voltage to be detected when a predetermined torque is applied to the shaft body 10 reaches a peak. Therefore, the grooves 22 may be formed by, for example, chemical treatment such as etching or machining such as cutting.

### [Cross-reference to Related Application]

The present application is based upon and claims the benefit of priority from Japanese Patent Application No. 2023-071564 filed to the Japan Patent Office on April 25, 2023, the entire disclosure of which is incorporated herein by reference.

## Claims

1. A magnetostrictive torque sensor shaft for a torque sensor, the torque sensor being configured to convert magnitude of torque applied to a cylindrical shaft body into voltage and detect it, and
the magnetostrictive torque sensor shaft comprising:
a magnetostrictive portion for torque detection, the magnetostrictive portion being provided on the shaft body,
wherein the magnetostrictive portion comprises:
a magnetostrictive film on a surface of the shaft body, and
a plurality of grooves in the magnetostrictive film,
wherein the plurality of grooves extend in a direction inclined relative to an axial direction of the shaft body and are arranged at a predetermined pitch in a circumferential direction of the shaft body,
wherein a setting range of the pitch comprises an upper limit value and a lower limit value, the upper limit value is set to a value less than a pitch at a limit of making the grooves by shot blasting, and the lower limit value is set to a value not less than a pitch at which the voltage to be detected when a predetermined torque is applied to the shaft body reaches a peak.

2. The magnetostrictive torque sensor shaft according to claim 1, wherein the pitch at which the voltage to be detected when the predetermined torque is applied to the shaft body reaches the peak is set based on a material of the magnetostrictive film and a length of the shaft body.

3. The magnetostrictive torque sensor shaft according to claim 1 or 2, wherein the pitch at which the voltage to be detected when the predetermined torque is applied to the shaft body reaches the peak is set to 0.4 mm to 0.6 mm when the material of the magnetostrictive film is an iron-cobalt alloy and the length of the shaft body is 80 mm to 90 mm.

4. The magnetostrictive torque sensor shaft according to claim 1 or 2, wherein the pitch at which the voltage to be detected when the predetermined torque is applied to the shaft body reaches the peak is set to 0.5 mm to 0.7 mm when the material of the magnetostrictive film is a nickel-iron alloy and the length of the shaft body is 80 mm to 90 mm.

5. The magnetostrictive torque sensor shaft according to claim 1 or 2, wherein the pitch at which the voltage to be detected when the predetermined torque is applied to the shaft body reaches the peak is set to 1.0 mm to 1.2 mm when the material of the magnetostrictive film is a nickel-iron alloy and the length of the shaft body is 42.5 mm to 52.5 mm.
